# EUROPEAN PATENT APPLICATION

(11) **EP 3 889 811 A1**
(43) Date of publication of application: **06.10.2021**
(21) Application number: 18941489.9
(22) Date of filing: 29.11.2018
(51) Int. Cl.: G06F 21/32

(54) **AUTHENTICATION SERVER AND AUTHENTICATION METHOD**

(71) Applicant: Fujitsu Frontech Limited, Inagi-shi, Tokyo 206-8555 (JP)
(72) Inventor: TOYA, Junichiro, Inagi-shi, Tokyo 206-8555 (JP)
(74) Representative: Haseltine Lake Kempner LLP
(86) International application number: PCT/JP2018/044045
(87) International publication number: WO 2020/110265

(57) **Abstract**

An authentication server enables biometric authentication with a device that does not have a guidance function related to the biometric authentication. An authentication server (10-1, 10-2) includes a memory (10b) and a processor (10a). The memory (10b) stores a template in which a plurality of pieces of first biometric information are registered. The processor (10a) performs guidance related to biometric authentication using a screen transmitted to a mobile terminal (20) to perform the biometric authentication by collating, with the plurality of pieces of first biometric information, second biometric information received from a device to which a biometric sensor (32, 62) is connected according to the guidance.

## Description

### Technical Field

The disclosed technology relates to an authentication server and an authentication method.

### Background Art

Biometric authentication technology that performs personal authentication using biometric information has become widespread. An example of the biometric authentication includes performing personal authentication using biometric information such as a fingerprint pattern and a vein pattern of the palm.

### Citation List

### Patent Literature

Patent Literature 1: JP 2010-238158 A

### Summary of invention

### Technical Problem

However, biometric authentication could not be performed with a device that does not have a guidance function related to biometric authentication, such as a refueling machine and a vehicle.

The disclosed technique has been made in view of the above, and an object thereof is to enable biometric authentication with a device having no guidance function related to biometric authentication.

### Solution to Problem

In one aspect of the disclosed embodiment, an authentication server includes a memory and a processor. The memory stores a template in which a plurality of pieces of first biometric information are registered. The processor performs guidance related to biometric authentication using a screen transmitted to a mobile terminal to perform the biometric authentication by collating, with the plurality of pieces of first biometric information, second biometric information received from a device according to the guidance, the device being connected to a biometric sensor.

### Advantageous Effects of Invention

According to an aspect of the disclosure, it is possible to enable biometric authentication with a device that does not have a guidance function related to biometric authentication.

### Brief Description of Drawings

FIG. 1 is a diagram illustrating a configuration example of a biometric authentication system of the first embodiment.
FIG. 2 is a diagram illustrating a configuration example of an authentication server of the first embodiment.
FIG. 3 is a diagram illustrating an example of a processing sequence of the biometric authentication system of the first embodiment.
FIG. 4 is a diagram illustrating an example of a device information table of the first embodiment.
FIG. 5 is a diagram illustrating an example of a processing sequence of the biometric authentication system of the first embodiment.
FIG. 6 is a diagram illustrating a configuration example of the biometric authentication system of the second embodiment.
FIG. 7 is a diagram illustrating an example of a processing sequence of the biometric authentication system of the second embodiment.
FIG. 8 is a diagram illustrating an example of the device information table of the second embodiment.
FIG. 9 is a diagram illustrating an example of a management table of the second embodiment.
FIG. 10 is a diagram illustrating an example of a processing sequence of the biometric authentication system of the second embodiment.

### Embodiments for Carrying Out the Invention

Hereinafter, embodiments of the authentication server and the authentication method disclosed in the present application will be described in detail with reference to the drawings. The embodiments do not limit the authentication server and authentication method disclosed in the present application. Further, in the following embodiments, the same reference numerals are given to the configurations having the same functions and the steps for performing the same processing, and duplicate description will be omitted.

### [First embodiment]

### <Configuration of biometric authentication system>

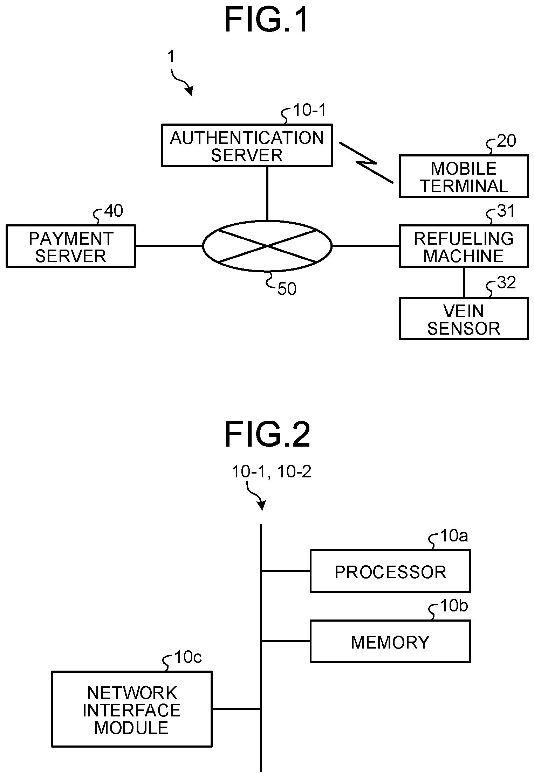

FIG. 1 is a diagram illustrating a configuration example of the biometric authentication system of the first embodiment. In FIG. 1, a biometric authentication system 1 includes an authentication server 10-1, a mobile terminal 20, a refueling machine 31, a vein sensor 32, and a payment server 40. The authentication server 10-1 and the mobile terminal 20 communicate wirelessly with each other. An example of the mobile terminal 20 includes a smart device such as a smartphone or a tablet. The authentication server 10-1 and the payment server 40 are connected via a wide area network (WAN) 50. Similarly, the authentication server 10-1 and the refueling machine 31 are connected via the WAN 50. The refueling machine 31 is installed at the service station and supplies engine fuel such as gasoline and light oil to the vehicle.

In the first embodiment, an example of biometric information includes the vein pattern of the palm (hereinafter sometimes referred to as a "vein pattern"). As an example of a biometric sensor, the vein sensor 32 will be described. Further, in the first embodiment, the refueling machine 31 will be described as an example of the device to which the biometric sensor is connected.

The vein sensor 32 is connected to the refueling machine 31 using a universal serial bus (USB). The vein sensor 32 acquires an image of the veins of the palm (hereinafter sometimes referred to as a "vein image") by scanning the user's palm to output the acquired vein image to the refueling machine 31. The refueling machine 31 transmits the vein image acquired by the vein sensor 32 to the authentication server 10-1 using the USB redirector. By using the USB redirector, the device driver specific to the vein sensor 32, which is a USB device, does not need to be installed on the refueling machine 31, and the vein sensor 32 can operate by using the device driver installed on the authentication server 10-1.

### <Configuration of authentication server>

FIG. 2 is a diagram illustrating a configuration example of the authentication server of the first embodiment. In FIG. 2, the authentication server 10-1 includes a processor 10a, a memory 10b, and a network interface module 10c. Examples of the processor 10a include a central processing unit (CPU), a digital signal processor (DSP), a field programmable gate array (FPGA), etc. Examples of memory 10b include a random access memory (RAM) such as a synchronous dynamic random access memory (SDRAM), a read only memory (ROM), and a flash memory. The processor 10a communicates with the mobile terminal 20, the refueling machine 31, and the payment server 40 by using the network interface module 10c. An authentication server 10-2 of the second embodiment, which will be described later, also has the same configuration as the authentication server 10-1 (FIG. 2).

### <Processing of biometric authentication system>

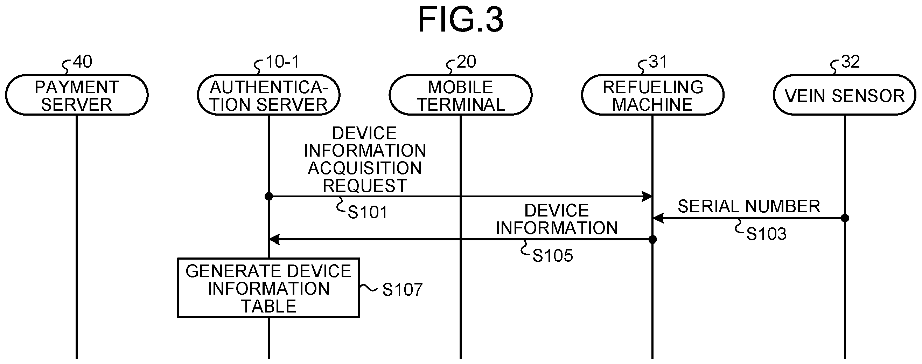

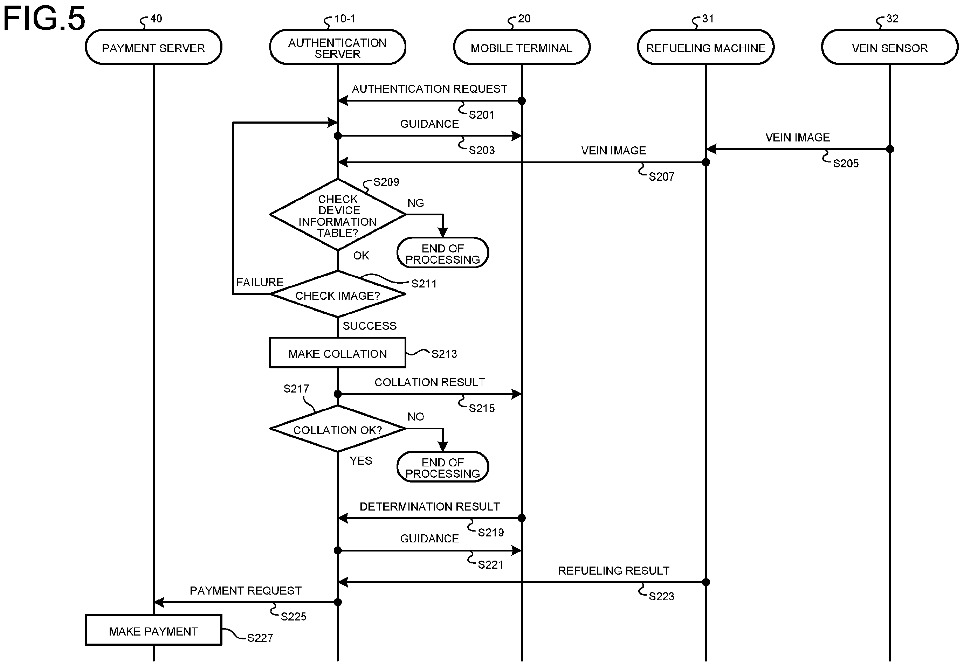

FIGS. 3 and 5 are diagrams illustrating an example of the processing sequence of the biometric authentication system of the first embodiment. FIG. 3 illustrates a processing sequence at the time of generating the device information table, and FIG. 5 illustrates a processing sequence at the time of biometric authentication. Hereinafter, the processing sequence at the time of generating the device information table and the processing sequence at the time of biometric authentication will be described separately.

### <Processing sequence when generating device information table>

In FIG. 3, in step S101, the processor 10a of the authentication server 10-1 transmits the device information acquisition request to the refueling machine 31.

In step S103, in response to the device information acquisition request received in step S101, the refueling machine 31 acquires, from the vein sensor 32, the serial number of the vein sensor 32 connected to the refueling machine 31 (hereinafter sometimes referred to as the "vein sensor serial number").

In step S105, the refueling machine 31 generates device information including the vein sensor serial number, the name of the service station where the refueling machine 31 is installed (hereinafter sometimes referred to as the "SS name"), and the device number of the refueling machine 31 (hereinafter sometimes referred to as the "refueling machine number") to transmit the generated device information to the authentication server 10-1. Since a plurality of refueling machines 31 are connected to the authentication server 10-1 via the WAN, the authentication server 10-1 receives device information from each of the plurality of refueling machines 31.

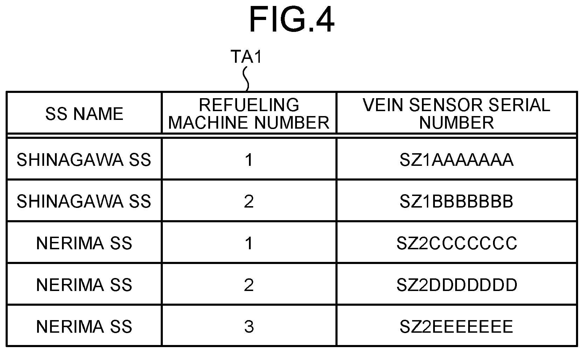

In step S107, the processor 10a generates, based on the received device information, a device information table TA1 illustrated in FIG. 4 to store the generated device information table TA1 in the memory 10b. FIG. 4 is a diagram illustrating an example of the device information table of the first embodiment. As illustrated in FIG. 4, the device information table TA1 indicates the SS name, the refueling machine number, and the vein sensor serial number in association with each other. Each vein sensor 32 has a vein sensor serial number specific to each vein sensor 32, and each vein sensor 32 can be uniquely identified according to the vein sensor serial number. In addition, each refueling machine 31 can be uniquely identified according to the combination of the SS name and the refueling machine number.

### <Processing sequence for biometric authentication>

In FIG. 5, in step S201, the mobile terminal 20 transmits an authentication request to the authentication server 10-1. For example, an authentication request screen on which each item of the member number, the SS name, the refueling machine number, and the oil type can be specified is displayed on the touch panel of the mobile terminal 20. Further, a confirmation button is displayed on the touch panel of the mobile terminal 20. When the confirmation button is touched after each of these items is specified by the user, the mobile terminal 20 transmits an authentication request including the specified member number, SS name, refueling machine number, and oil type to the authentication server 10-1.

In the first-time process of step S203, in response to the authentication request received from the mobile terminal 20, the processor 10a of the authentication server 10-1 transmits a guidance screen DA urging the user to hold the palm over the vein sensor 32 to the mobile terminal 20. As a result, the guidance screen DA is displayed on the touch panel of the mobile terminal 20, and the user holds the palm over the vein sensor 32 according to the guidance screen DA.

In step S205, the vein sensor 32 acquires a vein image to output the acquired vein image together with the vein sensor serial number to the refueling machine 31. The vein image is an example of a biometric image.

In step S207, the refueling machine 31 transmits the vein image and the vein sensor serial number input from the vein sensor 32 together with the SS name where the refueling machine 31 is installed and the refueling machine number of the refueling machine 31 to the authentication server 10-1.

In step S209, the processor 10a determines, as a first check point, whether or not the combination of the SS name and the refueling machine number received in step S201 exists in the device information table TA1. Also, the processor 10a determines, as a second check point, whether or not the combination of the SS name, the refueling machine number, and the vein sensor serial number received in step S207 exists in the device information table TA1.
In addition, the processor 10a determines, as a third check point, whether or not the SS name and refueling machine number received in step S201, and the SS name and refueling machine number received in step S207 match. Then, when the processor 10a has validated all of the first, second, and third confirmations (step S209: OK), the process proceeds to step S211. On the other hand, when processor 10a does not make a positive determination on any of the first check point, the second check point and the third check point (step S209: NG), the processor 10a ends the process.

In step S211, the processor 10a checks the vein image received from the refueling machine 31 to determine the success or the failure of the acquisition of the vein image. For example, when a vein image of the entire palm is acquired, the processor 10a determines that the vein image is successfully acquired, and when a vein image with part of the palm missing is acquired, the processor 10a determines that the acquisition of the vein image has failed.

When it is determined in step S211 that the acquisition of the vein image has failed (step S211: failure), the process returns to step S203. In the second-time and subsequent processes of step S203 (that is, the process when it is determined that the acquisition of the vein image has failed), the processor 10a transmits a guidance screen DB urging the user to align the center of the palm with the center of the sensor face of the vein sensor 32 to the mobile terminal 20, and the guidance screen DB is displayed on the touch panel of the mobile terminal 20. For example, the processor 10a synthesizes the vein image received in step S207 with the image representing the center of the sensor face of the vein sensor 32 to generate the guidance screen DB indicating the relative positional relationship of the palm with respect to the center of the sensor face. According to the guidance screen DB displayed on the touch panel of the mobile terminal 20, the user adjusts the position of the palm with respect to the vein sensor 32 so that the center of the palm matches the center of the sensor face of the vein sensor 32.

When it is determined that the vein image is successfully acquired in step S211 as a result of induction by the first-time process or the second-time and subsequent processes in step S203 (step S211: success), the processor 10a generates the vein pattern from the vein image in step S213. The processor 10a performs biometric authentication by collating a plurality of vein patterns registered in advance in the template stored in the memory 10b with the vein pattern generated from the vein image received in step S207.

Next, in step S215, the processor 10a transmits the collation result in step S213 to the mobile terminal 20. For example, the processor 10a determines that the collation result is "OK" (authentication is OK) when the vein pattern generated from the vein image received in step S207 matches any of a plurality of vein patterns registered in advance in the template. On the other hand, the processor 10a determines that the collation result is "NG" (authentication is NG) when the vein pattern generated from the vein image received in step S207 matches none of the plurality of vein patterns registered in advance in the template. On the mobile terminal 20 that has received the "NG" collation result, the collation result is displayed on the touch panel of the mobile terminal 20. As a result, the user is notified that the biometric authentication has failed.

Next, in step S217, the processor 10a determines the collation result in step S213. When the collation result is "NG" (step S217: No), the processor 10a ends the process. On the other hand, when the collation result is "OK" (step S217: Yes), the processor 10a waits for receiving the determination result from the mobile terminal 20 with respect to the collation result.

In the mobile terminal 20 that has received the "OK" collation result, a confirmation screen asking the user whether or not the user agrees to pay the refueling price with the credit card registered in advance in the payment server 40 is displayed on the touch panel of the mobile terminal 20. Further, a confirmation button is displayed on the touch panel of the mobile terminal 20. Then, when the confirmation button is touched by the user, the mobile terminal 20 transmits the determination result to the authentication server 10-1 in step S219.

In step S221, the processor 10a that has received the determination result in step S219 transmits, to the mobile terminal 20, a guidance screen DC urging the user to insert the refueling nozzle corresponding to the oil type included in the authentication request received in step S201 of the refueling nozzles of the refueling machine 31 into the refueling port of the vehicle, and the guidance screen DC is displayed on the touch panel of the mobile terminal 20. The user starts refueling the vehicle according to the guidance screen DC displayed on the touch panel of the mobile terminal 20.

When the refueling nozzle is returned to the refueling machine 31 after refueling is completed, the refueling machine 31 transmits the refueling result including the oil type, the refueling amount, and the refueling price to the authentication server 10-1 in step S223.

The processor 10a that has received the refueling result in step S223 transmits a payment request including the member number received in step S201 and the refueling price received in step S223 to the payment server 40 in step S225.

The payment server 40 stores a payment table in which the member number and the credit card number are set in association with each other. The payment server 40 that has received the payment request in step S225 identifies the credit card number corresponding to the member number included in the payment request from the payment table to make a payment of the refueling price included in the payment request for the identified credit card number in step S227.

The first embodiment is described above.

### [Second embodiment]

### <Configuration of biometric authentication system>

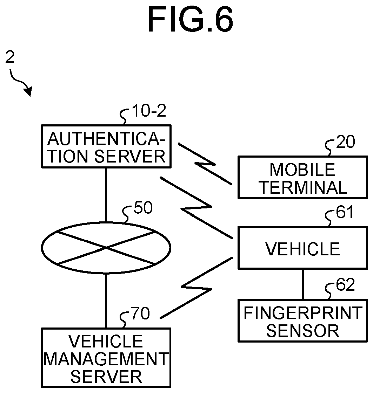

FIG. 6 is a diagram illustrating a configuration example of the biometric authentication system of the second embodiment. In FIG. 2, a biometric authentication system 2 includes an authentication server 10-2, the mobile terminal 20, a vehicle 61, a fingerprint sensor 62, and a vehicle management server 70. The authentication server 10-2 and the mobile terminal 20 communicate wirelessly with each other. In addition, the authentication server 10-2 and the vehicle 61 communicate wirelessly with each other. In addition, the vehicle management server 70 and the vehicle 61 communicate wirelessly with each other. The authentication server 10-2 and the vehicle management server 70 are connected via the WAN50.

In the second embodiment, a fingerprint pattern will be given as an example of biometric information, and the fingerprint sensor 62 will be given as an example of a biometric sensor. Further, in the second embodiment, the vehicle 61 will be described as an example of the device to which the biometric sensor is connected.

A fingerprint sensor 62 is connected to the vehicle 61 using a USB. For example, the fingerprint sensor 62 is installed on the door handle of the vehicle 61. The fingerprint sensor 62 acquires a fingerprint image (hereinafter sometimes referred to as a "fingerprint image") by scanning the user's finger to output the acquired fingerprint image to the vehicle 61. The vehicle 61 transmits the fingerprint image acquired by the fingerprint sensor 62 to the authentication server 10-2 using the USB redirector. By using a USB redirector, the device driver specific to the fingerprint sensor 62, which is a USB device, does not need to be installed on the vehicle 61, and the fingerprint sensor 62 can operate by using the device driver installed on the authentication server 10-2.

### <Configuration of authentication server>

The authentication server 10-2 of the second embodiment has the same configuration as the authentication server 10-1 of the first embodiment (FIG. 2). In authentication server 10-2, the processor 10a communicates with the mobile terminal 20, the vehicle 61, and the vehicle management server 70 by using the network interface module 10c.

### <Processing of biometric authentication system>

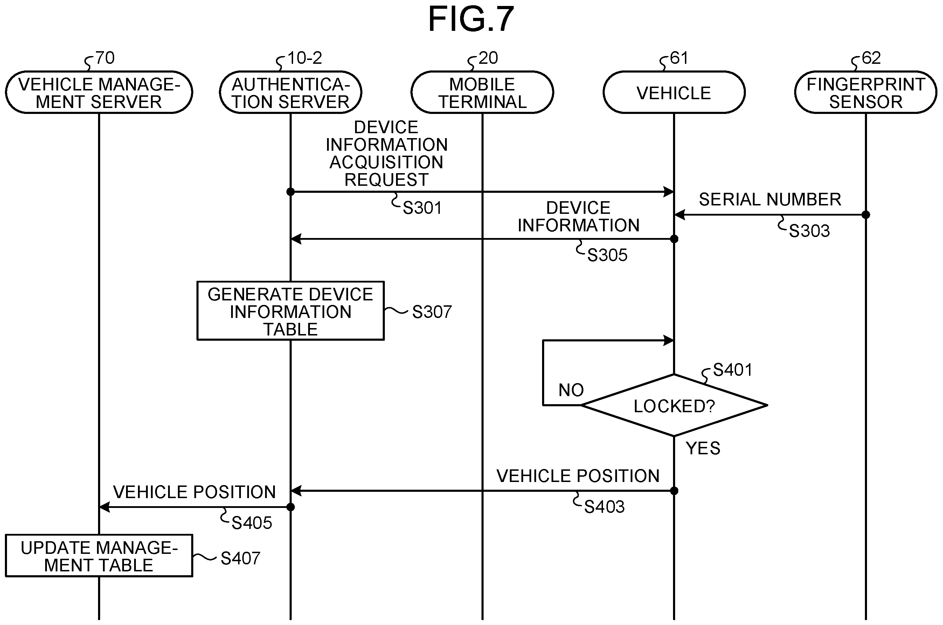

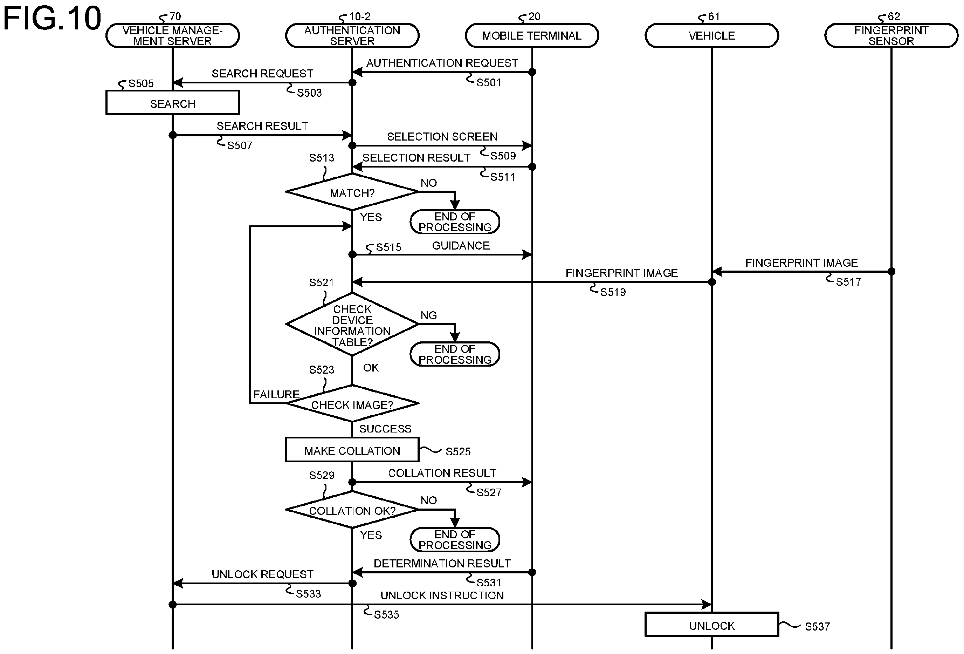

FIGS. 7 and 10 are diagrams illustrating an example of the processing sequence of the biometric authentication system of the second embodiment. FIG. 7 illustrates a processing sequence at the time of generating the device information table, and FIG. 10 illustrates a processing sequence at the time of biometric authentication. Hereinafter, the processing sequence at the time of generating the device information table and the processing sequence at the time of biometric authentication will be described separately.

### <Processing sequence when generating device information table>

In FIG. 7, in step S301, the processor 10a of the authentication server 10-2 transmits the device information acquisition request to the vehicle 61.

In step S303, in response to the device information acquisition request received in step S301, the vehicle 61 acquires the serial number of the fingerprint sensor 62 connected to the vehicle 61 (hereinafter sometimes referred to as a "fingerprint sensor serial number") from the fingerprint sensor 62.

In step S305, the vehicle 61 generates device information including the fingerprint sensor serial number and the vehicle registration number specific to vehicle 61 to transmit the generated device information to the authentication server 10-2. Since a plurality of vehicles 61 are wirelessly connected to the authentication server 10-2, the authentication server 10-2 receives device information from each of the plurality of vehicles 61.

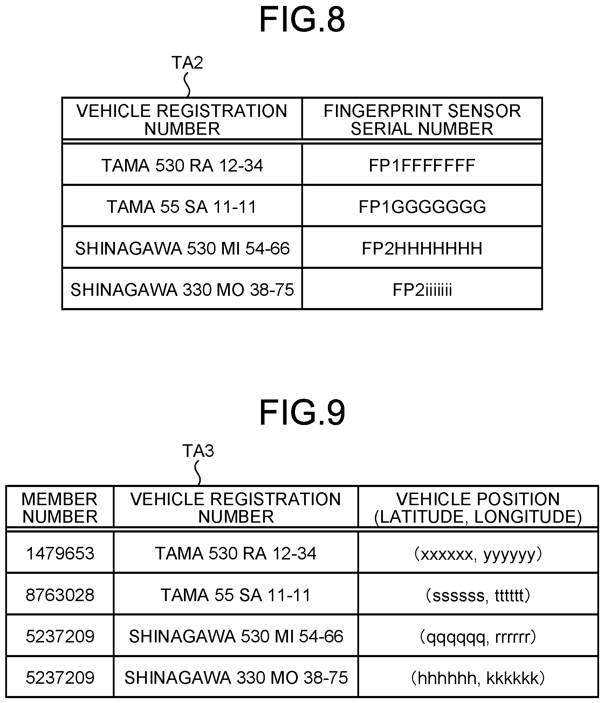

In step S307, the processor 10a generates, based on the received device information, a device information table TA2 illustrated in FIG. 8 to store the generated device information table TA2 in the memory 10b. FIG. 8 is a diagram illustrating an example of the device information table of the second embodiment. As illustrated in FIG. 8, the device information table TA2 indicates the vehicle registration number and the fingerprint sensor serial number in association with each other. Each fingerprint sensor 62 has a fingerprint sensor serial number specific to each fingerprint sensor 62, and each fingerprint sensor 62 can be uniquely identified according to the fingerprint sensor serial number. In addition, each vehicle 61 can be uniquely identified according to the vehicle registration number.

Further, the vehicle management server 70 stores a management table TA3 illustrated in FIG. 9. FIG. 9 is a diagram illustrating an example of the management table of the second embodiment. As illustrated in FIG. 9, the management table TA3 indicates the member number, the vehicle registration number, and the vehicle position in association with each other. The member number is the number specific to each user, and each user can be uniquely identified according to the member number. The vehicle position indicates the current position of each vehicle 61, and the current position of each vehicle 61 is identified from the latitude and longitude. As an example, the management table TA3 indicates that the user with member number 1479653 and the user with member number 8763028 each own one vehicle 61, and the user with member number 5237209 owns two vehicles 61.

The management table TA3 is updated when the door of vehicle 61 with the ignition turned off is locked. That is, in FIG. 7, in step S401, the vehicle 61 determines whether or not the ignition of vehicle 61 is turned off, and the door of the vehicle 61 is locked. When the ignition is turned off, the vehicle 61 repeats the process of step S401 at predetermined time intervals until the door is locked (step S401: No).

When the ignition is turned off and the door is locked (step S401: Yes), the vehicle 61 transmits the current vehicle position (latitude, longitude) together with the vehicle registration number of the vehicle 61 to the authentication server 10-2 in step S403. The vehicle 61 uses, for example, a global positioning system (GPS) mounted on the vehicle 61 to acquire the current vehicle position.

In step S405, the authentication server 10-2 transfers the vehicle registration number and the vehicle position received in step S403 to the vehicle management server 70.

In step S407, the vehicle management server 70 searches the management table TA3 using the vehicle registration number received in step S405 as a key, and the vehicle position corresponding to the key vehicle registration number in management table TA3 is updated according to the vehicle position received in step S405.

### <Processing sequence for biometric authentication>

In FIG. 10, in step S501, the mobile terminal 20 transmits an authentication request to the authentication server 10-2. For example, an authentication request screen on which a member number can be specified is displayed on the touch panel of the mobile terminal 20. Further, a confirmation button is displayed on the touch panel of the mobile terminal 20. When the confirmation button is touched after the member number is specified by the user, the mobile terminal 20 transmits an authentication request including the designated member number to the authentication server 10-2.

In step S503, the processor 10a of the authentication server 10-2 extracts the member number included in the authentication request received in step S501 from the authentication request to transmit a search request including the extracted member number to the vehicle management server 70.

In step S505, in response to the search request received in step S503, the vehicle management server 70 searches the management table TA3 using the member number included in the search request as a key (FIG. 9) to acquire the vehicle registration number corresponding to the key member number and vehicle position from the management table TA3.

In step S507, the vehicle management server 70 transmits the search result including the vehicle registration number and the vehicle position acquired from the management table TA3 to the authentication server 10-2. In the management table TA3, when there are a plurality of vehicle registration numbers corresponding to one member number, the vehicle management server 70 transmits the search result including the plurality of vehicle registration numbers and the plurality of vehicle positions to the authentication server 10-2.

In step S509, the processor 10a extracts the vehicle registration number included in the search result received in step S507 from the search result to transmit a selection screen DD that allows selection of any of the extracted vehicle registration numbers to the mobile terminal 20. As a result, the selection screen DD is displayed on the touch panel of the mobile terminal 20. The selection screen DD also includes a confirmation button.

In step S511, when the user touches the confirmation button after the user selects the vehicle registration number of the vehicle 61 whose door the user wants to unlock on the selection screen DD, the mobile terminal 20 transmits, to the authentication server 10-2, the selection result including the selected vehicle registration number and the current position of the mobile terminal 20 (hereinafter sometimes referred to as a "terminal position"). The terminal position is identified from the latitude and the longitude as in the vehicle position. The mobile terminal 20 acquires the terminal position using, for example, the GPS mounted on the mobile terminal 20.

In step S513, the processor 10a determines whether or not the vehicle position corresponding to the vehicle registration number received in step S511 of the vehicle positions received in step S507, and the terminal position received in step S511 match. When the vehicle position and the terminal position do not match (step S513: No), the processor 10a ends the process. On the other hand, when the vehicle position and the terminal position match (step S513: Yes), the process proceeds to step S515.

In the first-time process of step S515, the processor 10a transmits, to the mobile terminal 20, a guidance screen DE urging the user to bring the finger pad into contact with the fingerprint sensor 62. As a result, the guidance screen DE is displayed on the touch panel of the mobile terminal 20, and the user brings the finger pad into contact with the fingerprint sensor 62 according to the guidance screen DE.

In step S517, the fingerprint sensor 62 acquires a fingerprint image to output the acquired fingerprint image together with the fingerprint sensor serial number to the vehicle 61. The fingerprint image is an example of a biometric image.

In step S519, the vehicle 61 transmits, to the authentication server 10-2, the fingerprint image and the fingerprint sensor serial number input from the fingerprint sensor 62 together with the vehicle registration number of the vehicle 61.

In step S521, the processor 10a determines, as a first check point, whether or not the combination of the vehicle registration number and the fingerprint sensor serial number received in step S519 exists in the device information table TA2. Also, the processor 10a determines, as a second check point, whether or not the vehicle registration number received in step S511 and the vehicle registration number received in step S519 match. Then, when the processor 10a makes a positive determination on the first and second check points (step S521: OK), the process proceeds to step S523. On the other hand, when processor 10a does not make a positive determination on any of the first check point and the second check point (step S521: NG), the processor 10a ends the process.

In step S523, the processor 10a checks the fingerprint image received from the vehicle 61 to determine the success or the failure of the acquisition of the fingerprint image. For example, when a fingerprint image of the entire finger pad is acquired, the processor 10a determines that the fingerprint image is successfully acquired, and when a fingerprint image with part of the finger pad missing is acquired, the processor 10a determines that the acquisition of the fingerprint image has failed.

When it is determined in step S523 that the acquisition of the fingerprint image has failed (step S523: failure), the process returns to step S515. In the second-time and subsequent processes of step S515 (that is, the process when it is determined that the acquisition of the fingerprint image has failed), the processor 10a transmits a guidance screen DF urging the user to align the center of the finger pad with the center of the sensor face of the fingerprint sensor 62 to the mobile terminal 20, and the guidance screen DF is displayed on the touch panel of the mobile terminal 20. For example, the processor 10a synthesizes the fingerprint image received in step S519 with the image representing the center of the sensor face of the fingerprint sensor 62 to generate the guidance screen DF indicating the relative positional relationship of the finger pad with respect to the center of the sensor face. According to the guidance screen DF displayed on the touch panel of the mobile terminal 20, the user adjusts the position of the finger pad with respect to the fingerprint sensor 62 so that the center of the finger pad matches the center of the sensor face of the fingerprint sensor 62.

When it is determined that the fingerprint image is successfully acquired in step S523 as a result of induction by the first-time process or the second-time and subsequent processes in step S515 (step S532: success), the processor 10a generates a fingerprint pattern from the fingerprint image in step S525. The processor 10a performs biometric authentication by collating a plurality of fingerprint patterns registered in advance in the template stored in the memory 10b, with the fingerprint pattern generated from the fingerprint image received in step S519.

Next, in step S527, the processor 10a transmits the collation result in step S525 to the mobile terminal 20. For example, the processor 10a determines that the collation result to "OK" (authentication is OK) when the fingerprint pattern generated from the fingerprint image received in step S519 matches any of a plurality of fingerprint patterns registered in advance in the template. On the other hand, the processor 10a determines that the collation result is "NG" (authentication is NG) when the fingerprint pattern generated from the fingerprint image received in step S519 matches none of the plurality of fingerprint patterns registered in advance in the template. On the mobile terminal 20 that has received the "NG" collation result, the collation result is displayed on the touch panel of the mobile terminal 20. As a result, the user is notified that the biometric authentication has failed.

Then, in step S529, the processor 10a determines the collation result in step S525. When the collation result is "NG" (step S529: No), the processor 10a ends the process. On the other hand, when the collation result is "OK" (step S529: Yes), the processor 10a waits for receiving the determination result from the mobile terminal 20 with respect to the collation result.

In the mobile terminal 20 that has received the "OK" collation result, a confirmation screen asking the user whether or not the user agrees to unlock the door of the vehicle 61 having the vehicle registration number selected in step S511 is displayed on the touch panel of the mobile terminal 20. Further, a confirmation button is displayed on the touch panel of the mobile terminal 20. Then, when the confirmation button is touched by the user, the mobile terminal 20 transmits the determination result to the authentication server 10-2 in step S531.

The processor 10a that has received the determination result in step S531 transmits the unlock request including the vehicle registration number received in step S519 to the vehicle management server 70 in step S533.

The vehicle management server 70 which has received the unlock request in step S533 transmits the unlock instruction to the vehicle 61 having the vehicle registration number received in step S533, in step S535.

The vehicle 61 that has received the unlock instruction in step S535 unlocks the door of the vehicle 61 in step S537.

The second embodiment is described above.

As mentioned above, in the first embodiment and the second embodiment, the processor 10a performs guidance related to the biometric authentication using the screen transmitted to the mobile terminal 20 to perform the biometric authentication by collating a plurality of pieces of biometric information registered in the template with the biometric information received from a device to which the biometric sensor is connected according to the guidance.

In this way, since the guidance related to biometric authentication can be performed using the screen displayed on the mobile terminal 20, it is possible to enable the biometric authentication with a device that does not have a guidance function related to biometric authentication. For example, biometric authentication can be used to make a payment of the refueling price when refueling is performed by the refueling machine 31 that does not have a guidance function related to biometric authentication. Further, for example, biometric authentication can be used to unlock the door of the vehicle 61 having no guidance function related to biometric authentication.

Further, in the first embodiment and the second embodiment, the processor 10a performs guidance related to the biometric authentication until the biometric sensor successfully acquires the biometric image, which is the generation source of the biometric information. In this way, biometric authentication can be reliably performed.

### Explanation of Reference

- 1, 2: BIOMETRIC AUTHENTICATION SYSTEM

- 10-1, 10-2: AUTHENTICATION SERVER
- 10a: PROCESSOR
- 10b: MEMORY
- 10c: NETWORK INTERFACE MODULE
- 20: MOBILE TERMINAL
- 31: REFUELING MACHINE
- 32: VEIN SENSOR
- 40: PAYMENT SERVER
- 50: WAN
- 61: VEHICLE
- 62: FINGERPRINT SENSOR
- 70: VEHICLE MANAGEMENT SERVER

## Claims

1. An authentication server comprising:
a memory that stores a template in which a plurality of pieces of first biometric information are registered; and
a processor that performs guidance related to biometric authentication using a screen transmitted to a mobile terminal to perform the biometric authentication by collating, with the plurality of pieces of first biometric information, second biometric information received from a device according to the guidance, the device being connected to a biometric sensor.

2. The authentication server according to claim 1, wherein
the processor performs the guidance until the biometric sensor successfully acquires a biometric image which is a generation source of the second biometric information.

3. An authentication method, by a processor, comprising:
performing guidance related to biometric authentication using a screen transmitted to a mobile terminal; and
performing the biometric authentication by collating a plurality of pieces of first biometric information registered in a template with second biometric information received from a device according to the guidance, the device being connected to a biometric sensor.
